# FASCICULE DE BREVET EUROPEEN

(11) **EP 3 581 782 B1**
(45) Date de publication et mention de la délivrance du brevet: **24.11.2021**
(21) Numéro de dépôt: 19179422.1
(22) Date de dépôt: 11.06.2019
(51) Int. Cl.: F02K 9/58, F02K 9/56

(54) **PROCÉDÉ DE COMMANDE ET DISPOSITIF DE COMMANDE DE MOTEUR-FUSÉE**
STEUERVERFAHREN UND -VORRICHTUNG EINES RAKETENTRIEBWERKS
ROCKET ENGINE CONTROL METHOD AND CONTROL DEVICE

(30) Priorité: 13.06.2018 FR 1855185
(43) Date de publication de la demande: 18.12.2019
(73) Titulaire: ArianeGroup SAS, 78130 Les Mureaux (FR)
(72) Inventeur: REMY, Antoine, 27200 VERNON (FR); SIMON, Sandre, 27200 VERNON (FR); LE GONIDEC, Serge, 27200 VERNON (FR)
(74) Mandataire: Cabinet Beau de Loménie

(56) Documents cités:
- EP-A1- 3 318 744
- FR-A1- 3 042 227
- GB-A- 2 285 285

## Description

### DOMAINE TECHNIQUE

Le présent exposé concerne le domaine des moteurs-fusées, et plus particulièrement un procédé de commande d'un moteur-fusée et un dispositif de commande de moteur-fusée.

### ARRIÈRE-PLAN TECHNOLOGIQUE

Les moteurs-fusées comprennent classiquement, pour leur propulsion, une chambre de combustion alimentée en un ou plusieurs ergols. Dans le cas d'une pluralité d'ergols, chacun de ces ergols peut être conduit vers la chambre de combustion par une conduite d'alimentation, qui est le plus souvent munie d'une pompe et d'une vanne d'alimentation de la chambre de combustion, appelée plus simplement vanne chambre. La vanne chambre permet de réguler le débit de chaque ergol injecté dans la chambre de combustion.

Les moteurs-fusées connaissent généralement une multitude de points de fonctionnement correspondant à des situations de vol variées. Par conséquent, le domaine de fonctionnement et le domaine des dispersions matérielles des composants du moteur peuvent être très larges et, dans ces domaines, les caractéristiques des pompes n'évoluent pas de façon parallèle. Cela induit des variations, dans un sens ou dans l'autre, dans le rapport de mélange entre les ergols. Ces variations doivent pouvoir être compensées tout en conservant des performances optimales sur les points de fonctionnement principaux du moteur-fusée, ou au moins sur un point de fonctionnement de référence.

Il existe donc un besoin pour un nouveau type de procédé de commande d'un moteur-fusée et un dispositif de commande de moteur-fusée. Le document FR3042227 divulgue un procédé et un circuit de régulation d'un moteur-fusée selon l'état de la technique.

### PRÉSENTATION GÉNÉRALE

A cet effet, le présent exposé concerne un procédé de commande d'un moteur-fusée, le moteur-fusée comprenant une chambre de combustion, une première vanne d'alimentation de la chambre de combustion pour réguler le débit d'un premier ergol dans une première conduite d'alimentation configurée pour alimenter la chambre de combustion, et une deuxième vanne d'alimentation de la chambre de combustion pour réguler le débit d'un deuxième ergol dans une deuxième conduite d'alimentation configurée pour alimenter la chambre de combustion, le procédé comprenant la commande conjointe des première et deuxième vannes d'alimentation selon une loi en segments de plage.

Par souci de concision et conformément au vocabulaire usuellement employé, la première (respectivement deuxième) vanne d'alimentation de la chambre de combustion sera appelée plus simplement première (respectivement deuxième) vanne chambre.

Une loi de commande en segments de plage, connue aussi sous l'appellation anglaise « split-range », est une loi décomposant la plage de régulation en plusieurs segments et telle que seulement une partie des organes, en l'occurrence des vannes chambre, sont entraînées dans chaque segment.

Par exemple, la plage de régulation peut être décomposée en deux segments. Dans un premier segment, seule la première vanne chambre est entraînée et dans un deuxième segment, seule la deuxième vanne chambre est entraînée. Le point de jonction entre le premier segment et le deuxième segment peut être configuré pour correspondre au point de fonctionnement de référence du moteur-fusée, et/ou pour correspondre au point où le fonctionnement des vannes est optimisé.

Bien que les première et deuxième vannes chambre soient entraînées à tour de rôle, selon le segment de régulation dans lequel on se trouve, les première et deuxième vannes chambre sont commandées conjointement en raison de la dépendance entre la commande de l'une et la commande de l'autre.

La régulation des vannes chambre permet de modifier le rapport de mélange, c'est-à-dire le rapport entre les débits des premier et deuxième ergols. Le rapport de mélange peut être considéré, par exemple, à l'entrée des pompes des ergols respectifs ou à l'entrée de la chambre de combustion. Les débits utilisés pour calculer le rapport de mélange sont alors mesurés ou estimés aux endroits correspondants.

Grâce à l'utilisation d'une commande conjointe des première et deuxième vannes chambre selon une loi en segments de plage, il est possible de compenser la variation des caractéristiques des pompes tout en conservant une grande plage de régulation, voire en l'augmentant. En effet, à définition des vannes chambre inchangée, la plage de régulation du moteur-fusée peut être augmentée, car, autour du point de fonctionnement de référence, les deux vannes chambre sont disponibles pour ajuster les performances du moteur-fusée. De plus grandes dispersions pour les variations des caractéristiques des pompes deviennent alors acceptables. Inversement, il serait possible, à plage de régulation inchangée, de relâcher les contraintes sur la définition et les performances des vannes chambre, d'où un coût réduit pour le moteur-fusée.

De plus, comme indiqué précédemment, la performance du moteur-fusée au point de fonctionnement de référence peut être optimisée.

Dans certains modes de réalisation, la loi en segments de plage détermine le degré d'ouverture des première et deuxième vannes chambre en fonction du rapport de mélange des premier et deuxième ergols.

Dans certains modes de réalisation, le procédé de commande comprend une régulation de la commande des première et deuxième vannes chambre en boucle ouverte. Par exemple, la loi en segments de plage peut utiliser une valeur de consigne du rapport de mélange, indépendamment de la valeur réelle du rapport de mélange, pour commander les ouvertures des première et deuxième vannes chambre. Le procédé de commande est ainsi simple à mettre en œuvre.

Dans certains modes de réalisation, le procédé de commande comprend une régulation de la commande des première et deuxième vannes chambre en boucle fermée. Par exemple, la loi en segments de plage peut utiliser une valeur réelle du rapport de mélange, mesurée ou estimée, pour commander les ouvertures des première et deuxième vannes chambre. Ainsi, la commande des première et deuxième vannes peut être réalisée en fonction d'une différence entre la valeur réelle du rapport de mélange et une valeur de consigne du rapport de mélange. Cela permet de compenser les biais de fonctionnement. Il s'ensuit une meilleure précision du procédé de commande.

Dans certains modes de réalisation, la loi en segments de plage est paramétrée de sorte que les première et deuxième vannes chambre présentent une ouverture maximale au point de jonction entre les segments de plage. En particulier, les vannes qui sont entraînées directement de part et d'autre du point de jonction peuvent présenter une ouverture maximale audit point de jonction. Par exemple, si le point de jonction correspond au point de fonctionnement de référence du moteur-fusée, alors, les vannes chambre étant pleinement ouvertes, l'impulsion spécifique du moteur-fusée peut être optimisée en ce point.

Dans certains modes de réalisation, le moteur-fusée comprend, sur chaque conduite d'alimentation, une pompe configurée pour entraîner l'ergol circulant dans ladite conduite, les pompes étant entraînées par un arbre commun. L'arbre commun peut lui-même être entraîné par une turbine commune. Selon un exemple, les pompes et la turbine commune peuvent former une turbopompe mono-arbre. Le fait que les pompes soient entraînées par un arbre commun permet de découpler le rapport de mélange d'autres paramètres du moteur tel que la pression dans la chambre de combustion et/ou, le cas échéant, la température du générateur de gaz. Le découplage permet de simplifier la commande du moteur-fusée et le procédé de commande précité se révèle, dans ce contexte, encore plus avantageux.

Dans certains modes de réalisation, le moteur-fusée est à cycle à générateur de gaz. Plus particulièrement, dans certains modes de réalisation, le moteur-fusée comprend un générateur de gaz, le générateur de gaz étant alimenté en premier ergol et en deuxième ergol par des conduites de dérivation correspondantes respectivement branchées en dérivation sur les conduites d'alimentation en amont des vannes chambre. En d'autres termes, dans ces modes de réalisation, une première conduite de dérivation relie la première conduite d'alimentation, en amont de la première vanne chambre, au générateur de gaz, et une deuxième conduite de dérivation relie la deuxième conduite d'alimentation, en amont de la deuxième vanne chambre, au générateur de gaz. Des vannes de dérivations peuvent être prévues, respectivement, sur tout ou partie des conduites de dérivation, pour réguler le débit d'ergol vers le générateur de gaz. Le cas échéant, les vannes de dérivation peuvent être commandées, indépendamment ou en relation avec les vannes chambre, pour contrôler d'autres paramètres de fonctionnement du moteur-fusée.

Dans certains modes de réalisation, les différentes étapes du procédé de commande sont déterminées par des instructions de programmes d'ordinateur.

Ainsi, le présent exposé concerne également un programme comportant des instructions pour l'exécution des étapes du procédé de commande tel que précédemment décrit lorsque ledit programme est exécuté par un ordinateur ou par un microprocesseur. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le présent exposé concerne également un support d'enregistrement lisible par un ordinateur sur lequel est enregistré un programme d'ordinateur comprenant des instructions pour l'exécution des étapes du procédé de commande tel que précédemment décrit.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon le présent exposé peut être en particulier téléchargé sur un réseau de type Internet.

Le présent exposé concerne également un dispositif de commande de moteur-fusée, le moteur-fusée comprenant une chambre de combustion, une première vanne chambre pour réguler le débit d'un premier ergol dans une première conduite d'alimentation configurée pour alimenter la chambre de combustion, et une deuxième vanne chambre pour réguler le débit d'un deuxième ergol dans une deuxième conduite d'alimentation configurée pour alimenter la chambre de combustion, le dispositif de commande étant configuré pour commander conjointement les première et deuxième vannes chambre selon une loi en segments de plage. Ce dispositif peut être adapté pour la mise en œuvre du procédé précédemment décrit.

Le présent exposé concerne également un moteur-fusée comprenant une chambre de combustion, une première vanne chambre pour réguler le débit d'un premier ergol dans une première conduite d'alimentation configurée pour alimenter la chambre de combustion, et une deuxième vanne chambre pour réguler le débit d'un deuxième ergol dans une deuxième conduite d'alimentation configurée pour alimenter la chambre de combustion, et un dispositif de commande tel que précédemment décrit.

### BRÈVE DESCRIPTION DES DESSINS

L'invention et ses avantages seront mieux compris à la lecture de la description détaillée qui suit, de modes de réalisation donnés à titre d'exemples non limitatifs. Cette description se réfère aux dessins annexés, sur lesquels :
- la figure 1 représente schématiquement un moteur-fusée selon un mode de réalisation ;
- la figure 2 illustre une loi de commande en segments de plage selon un mode de réalisation ;
- la figure 3 représente un procédé de commande de moteur-fusée selon un mode de réalisation ;
- la figure 4 illustre le fonctionnement du moteur-fusée lors de la mise en œuvre d'un procédé de commande selon un mode de réalisation ;
- la figure 5 illustre une loi de commande en segments de plage selon un autre mode de réalisation ;
- la figure 6 représente un procédé de commande de moteur-fusée selon un autre mode de réalisation.

### DESCRIPTION DÉTAILLÉE DE MODES DE RÉALISATION

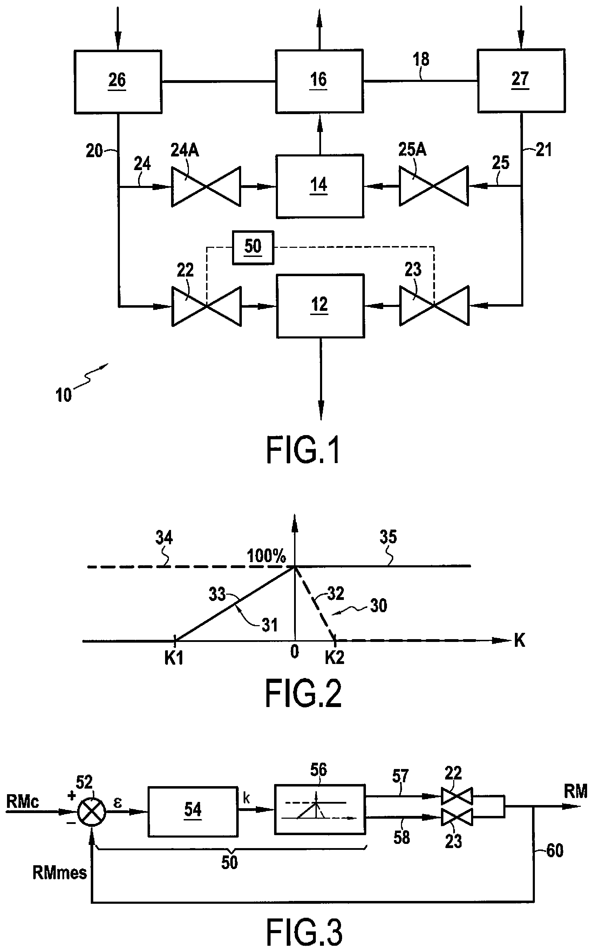

Un moteur-fusée 10 selon un mode de réalisation est représenté schématiquement sur la figure 1. Le moteur-fusée 10 comprend une chambre de combustion 12 configurée pour être alimentée en un premier ergol, par exemple du méthane, et un deuxième ergol, par exemple de l'oxygène liquide. Ainsi, le moteur-fusée peut comprendre une première conduite d'alimentation 20 pour l'alimentation de la chambre de combustion 12 en premier ergol et une deuxième conduite d'alimentation 21 pour l'alimentation de la chambre de combustion 12 en deuxième ergol. Les ergols peuvent provenir de réservoirs non représentés.

La première conduite d'alimentation 20 (respectivement deuxième conduite d'alimentation 21) peut être munie d'une première vanne chambre 22 (respectivement deuxième vanne chambre 23) configurée pour réguler le débit du premier ergol (respectivement du deuxième ergol) dans la première conduite d'alimentation 20 (respectivement deuxième conduite d'alimentation 21).

Les débits dans les conduites d'alimentation 20, 21 peuvent être également régulés par une première pompe 26 et une deuxième pompe 27 en amont des vannes chambre 22, 23 respectives. Chacune des pompes 26, 27 est configurée pour entraîner l'ergol circulant dans la conduite d'alimentation correspondante 20, 21.

En l'espèce, le moteur-fusée 10 est un moteur-fusée à cycle à générateur de gaz et comprend donc un générateur de gaz 14. Dans ce mode de réalisation, le générateur de gaz 14 est alimenté en ergols soutirés sur les conduites d'alimentation 20, 21. En d'autres termes, le moteur-fusée 10 comprend des conduites de dérivation 24, 25, branchées en dérivation respectivement sur la première conduite d'alimentation 20 et sur la deuxième conduite d'alimentation 21, en amont des vannes chambre respectives 22, 23. Chaque conduite de dérivation 24, 25 peut être munie d'une vanne de dérivation 24A, 25A pour la régulation du débit des ergols alimentant le générateur de gaz 14.

Le générateur de gaz 14 produit, grâce à la combustion des ergols soutirés, des gaz qui entraînent une turbine 16. Dans ce mode de réalisation, la turbine 16 entraîne à son tour en rotation un arbre 18. L'arbre 18 entraîne à son tour les première et deuxième pompes 26, 27. En d'autres termes, la première pompe 26 et la deuxième pompe 27 sont entraînées par un arbre commun 18. En l'espèce, la turbine 16, l'arbre 18 et les pompes 26, 27 peuvent appartenir à une même turbopompe mono-arbre.

Le moteur-fusée 10 peut comprendre en outre un dispositif de commande 50 configuré pour commander les première et deuxième vannes 22, 23, comme il sera expliqué par la suite. En particulier, le dispositif de commande 50 est configuré pour commander conjointement les première et deuxième vannes chambre 22, 23 selon une loi en segments de plage.

Un mode de réalisation d'une loi en segments de plage est illustré sur la figure 2. La figure 2 est un graphe représentant le degré d'ouverture des vannes chambre, variant entre 0% (position la plus fermée possible) et 100% (position la plus ouverte possible), en fonction d'un facteur K variant entre K1 et K2 (ici, K1<0<K2). Sur ce graphe sont tracées la courbe 30 correspondant au degré d'ouverture de la première vanne chambre 22 et la courbe 31 correspondant au degré d'ouverture de la deuxième vanne chambre 23.

Comme illustré par la courbe 30, le degré d'ouverture de la première vanne chambre peut valoir 100% pour K=K1, demeurer constant entre K1 et 0 (portion 34), valoir 100% pour K=0 et décroître jusqu'à 0% entre 0 et K2 (portion 32), de façon à valoir 0% à K=K2. La décroissance de la courbe 30 le long de la portion 32 peut être linéaire, comme illustré, ou d'un autre type, par exemple quadratique, concave ou convexe, par paliers, etc.

Par ailleurs, comme illustré par la courbe 31, le degré d'ouverture de la deuxième vanne chambre peut valoir 0% pour K=K1, puis croître entre K1 et 0 (portion 33), valoir 100% pour K=0 et demeurer constant à 100% entre 0 et K2 (portion 35). La croissance de la courbe 31 le long de la portion 33 peut être linéaire, comme illustré, ou d'un autre type, par exemple quadratique, concave ou convexe, par paliers, etc.

Ainsi, pour K=0, les deux vannes chambre 22, 23 sont ouvertes à 100%. Ce point K=0 peut correspondre au point de fonctionnement de référence du moteur-fusée 10. Ainsi, au point de fonctionnement de référence, le haut degré d'ouverture des deux vannes chambre 22, 23 permet d'optimiser l'impulsion spécifique du moteur.

Si le facteur K est inférieur à 0, alors la deuxième vanne chambre 23 est progressivement refermée, conformément à la portion 33 de la courbe 31, ce qui permet de réduire la teneur en ergol du mélange dans la chambre de combustion 12. Par exemple, le rapport de mélange est ainsi diminué. A l'extrême, au cas où K=K1, le degré d'ouverture de la deuxième vanne chambre 23 est minimal. Parallèlement, dans tout ce segment compris entre K1 et 0, le degré d'ouverture de la première vanne chambre 22 reste à 100% (portion 34).

Par ailleurs, si le facteur K est supérieur à 0, alors la première vanne chambre 22 est progressivement refermée, conformément à la portion 32 de la courbe 30, ce qui permet de réduire la teneur en premier ergol du mélange dans la chambre de combustion 12. Par exemple, le rapport de mélange est ainsi augmenté. A l'extrême, au cas où K=K2, le degré d'ouverture de la première vanne chambre 22 est minimal. Parallèlement, dans tout ce segment compris entre 0 et K2, le degré d'ouverture de la deuxième vanne chambre 23 reste à 100% (portion 35).

Ainsi, sur chacun des segments [K1 ; 0] et [0 ; K2], seule une vanne d'alimentation est entraînée ; toutefois, les deux vannes chambre 22, 23 sont commandées conjointement pour obtenir une régulation du rapport de mélange dans un sens de réduction ou d'augmentation.

Les pentes respectives des portions 32, 33, ou plus généralement leurs lois d'évolution, peuvent différer l'une de l'autre, par exemple pour prendre en compte l'évolution des caractéristiques des vannes chambre 22, 23, qui diffèrent elles-mêmes l'une de l'autre. Ainsi, la pente choisie peut compenser la différence de gain statique entre les deux vannes chambre 22, 23, afin d'obtenir des dynamiques similaires lors de la régulation.

Le facteur K peut être vu comme un paramètre de commande d'une vanne virtuelle, qui est ensuite distribué en commande sur la première vanne chambre 22 et la deuxième vanne chambre 23. Selon un exemple, le facteur K peut être calculé en fonction du rapport de mélange des premier et deuxième ergols. Par exemple, le facteur K peut être égal à la différence entre le rapport de mélange cible (rapport de mélange de consigne) et le rapport de mélange nominal au point de fonctionnement de référence. Lorsque le rapport de mélange cible et le rapport de mélange nominal au point de fonctionnement de référence sont égaux, le facteur K vaut 0. Les bornes K1 et K2 peuvent être calculées en fonction de la variation connue du rapport de mélange dans la plage de fonctionnement du moteur-fusée 10.

Ainsi, dans ce mode de réalisation, la loi en segments de plage détermine le degré d'ouverture des première et deuxième vannes chambre 22, 23, en fonction du rapport de mélange des premier et deuxième ergols. Ceci est fait de manière indirecte, via le facteur K, mais pourrait aussi être prévu de manière directe.

La régulation des vannes chambre 22, 23 peut être mise en œuvre en boucle ouverte ou bien, comme illustré sur la figure 3, en boucle fermée. La figure 3 illustre le dispositif de commande 50 et le procédé dans lequel il s'inscrit.

Dans cet exemple, le dispositif de commande 50 peut comprendre un comparateur 52, un régulateur 54 et un convertisseur 56.

Le comparateur 52 reçoit une valeur RMc, qui est un rapport de mélange cible, et la valeur mesurée ou estimée RMmes du rapport de mélange. Le comparateur 52 est un organe qui effectue la soustraction entre ces deux valeurs et retourne une valeur ε=RMc-RMmes qui traduit l'écart du rapport de mélange effectif par rapport à sa valeur de consigne.

Eventuellement, l'écart ε peut être fourni ensuite à un régulateur 54 qui effectue la correspondance entre l'écart ε et le facteur K. Ladite correspondance peut être stockée dans le régulateur 54 sous la forme d'une table prédéterminée ou équivalent. Ainsi, le facteur K peut être vu comme le degré d'ouverture d'une vanne virtuelle synthétisant les première et deuxième vannes chambre 22, 23.

Le facteur K qui est retourné par le régulateur 54 est fourni en entrée au convertisseur 56 qui, sur la base de la loi en segments de plage décrite en référence à la figure 2, détermine les degrés d'ouverture correspondants de la première vanne chambre 22 et de la deuxième vanne chambre 23. Ces degrés d'ouverture sont transmis sous la forme de signaux de commande 57, 58, respectivement.

Par opposition au cas d'une boucle ouverte, dans le cas d'une régulation en boucle fermée, le nouveau rapport de mélange RM résultant de la régulation des première et deuxième vannes chambre 22, 23 est mesuré ou estimé et fourni, grâce à une rétroaction 60, au comparateur 52. La boucle représentée sur la figure 3 peut être ainsi parcourue à différents instants successifs, régulièrement espacés ou non.

Le dispositif de commande 50 précité dispose ici de l'architecture matérielle d'un ordinateur. Il comporte notamment un processeur, une mémoire morte, une mémoire vive, une mémoire non volatile et des moyens de communication avec le reste du moteur-fusée 10, permettant au dispositif de commande 50 d'obtenir une valeur de cible du rapport de mélange, une valeur effective du rapport de mélange, et d'envoyer des signaux de commande aux vannes chambre 22, 23.

La mémoire morte du dispositif d'estimation 50 constitue un support d'enregistrement conforme au présent exposé, lisible par le processeur et sur lequel est enregistré un programme d'ordinateur conforme au présent exposé, comportant des instructions pour l'exécution des étapes d'un procédé de commande décrites précédemment en référence aux figures 2 et 3.

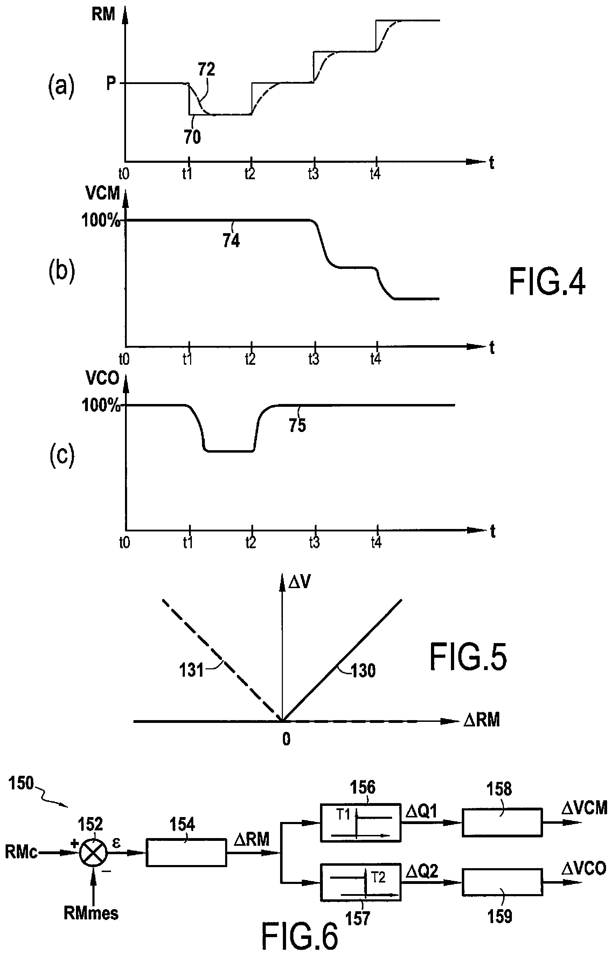

La mise en œuvre du procédé de commande précédemment décrit peut aboutir aux résultats présentés sur la figure 4.

Le graphe (a) de la figure 4 illustre la variation du rapport de mélange RM en fonction du temps t. La courbe 70, en trait plein, est le rapport de mélange cible et la courbe 72, en pointillés, est le rapport de mélange effectif mesuré ou estimé. Comme indiqué précédemment, le rapport de mélange peut être calculé à l'entrée des pompes 26, 27 ou à l'entrée de la chambre de combustion 12. Le point P désigne la valeur du rapport de mélange au point de fonctionnement de référence du moteur-fusée 10.

Sur le graphe (b) de la figure 4, la courbe 74 illustre la variation du degré d'ouverture de la première vanne chambre 22, VCM (pour « vanne chambre méthane »), en fonction du temps. VCM varie entre 0% et 100%. Sur le graphe (c) de la figure 4, la courbe 75 illustre la variation du degré d'ouverture de la deuxième vanne chambre 23, VCO (pour « vanne chambre oxygène »), en fonction du temps. VCO varie entre 0% et 100%.

Le rapport de mélange peut être défini de la façon suivante : RM=Q2/Q1, où Q1 est le débit du premier ergol (méthane) à travers la première vanne chambre 22 et Q2 est le débit du deuxième ergol (oxygène) à travers la deuxième vanne chambre 23. Ainsi, le rapport de mélange augmente lorsque le débit du deuxième ergol augmente en proportion et diminue lorsque le débit du premier ergol augmente en proportion. Chacun des débits Q1, Q2 est une fonction croissante du degré d'ouverture VCM, VCO de la vanne chambre 22, 23 correspondante.

Entre les instants t0 et t1, le rapport de mélange cible (courbe 70) vaut P. Le rapport de mélange effectif (courbe 72) vaut également P. Comme illustré sur les graphes (b) et (c), conformément à ce qui a été exposé précédemment, les deux vannes chambre 22, 23 sont chacune ouverte à 100%.

A l'instant t1, le rapport de mélange cible diminue. En réaction à cette diminution, le facteur K diminue en-dessous de 0 et, conformément à la loi en segments de plage illustrée sur la figure 2, le degré d'ouverture de la deuxième vanne chambre 23 diminue le long de la portion 33 de la courbe 31. Comme on peut le voir sur le graphe (c) de la figure 4, cela entraîne une diminution correspondante du degré d'ouverture VCO. Parallèlement, la courbe 74 montre que le degré d'ouverture VCM reste constant, ce qui est conforme à la portion 34 de la courbe 30. De ce fait, la courbe 72 présente, à partir de l'instant t1, une diminution jusqu'à parvenir au rapport de mélange cible, c'est-à-dire au même niveau que la courbe 70.

A l'instant t2, le rapport de mélange cible augmente pour retrouver son niveau à la valeur P. En réaction à cette augmentation, le facteur K augmente jusqu'à reprendre la valeur 0. Conformément à la loi en segments de plage illustrée sur la figure 2, le degré d'ouverture de la deuxième vanne chambre 23 augmente le long de la portion 33 de la courbe 31. Comme on peut le voir sur le graphe (c) de la figure 4, cela entraîne une augmentation correspondante du degré d'ouverture VCO. Parallèlement, la courbe 74 montre que le degré d'ouverture VCM reste constant, ce qui est conforme à la portion 34 de la courbe 30. De ce fait, la courbe 72 présente, à partir de l'instant t2, une augmentation jusqu'à parvenir au rapport de mélange cible, c'est-à-dire au même niveau que la courbe 70, en l'occurrence au point de fonctionnement de référence.

A l'instant t3, le rapport de mélange cible augmente à nouveau. En réaction à cette augmentation, le facteur K augmente au-delà de 0 et, conformément à la loi en segments de plage illustrée sur la figure 2, le degré d'ouverture de la première vanne chambre 22 diminue le long de la portion 32 de la courbe 30. Comme on peut le voir sur le graphe (b) de la figure 4, cela entraîne une diminution correspondante du degré d'ouverture VCM. Parallèlement, la courbe 75 montre que le degré d'ouverture VCO reste constant, ce qui est conforme à la portion 35 de la courbe 31. De ce fait, la courbe 72 présente, à partir de l'instant t3, une augmentation jusqu'à parvenir au rapport de mélange cible, c'est-à-dire au même niveau que la courbe 70.

Le même phénomène se produit à partir de l'instant t4.

Les figures 5 et 6 présentent la commande du moteur-fusée 10 selon un autre mode de réalisation. Sur ces figures, les éléments correspondant ou identiques à ceux du premier mode de réalisation recevront le même signe de référence, au chiffre des centaines près, et ne seront pas décrits à nouveau.

La figure 5 illustre une autre représentation d'une loi de commande en segments de plage. Sur cette figure, l'écart de degré d'ouverture d'une vanne chambre, ΔV, par rapport au degré d'ouverture maximale, en valeur absolue, est tracé en fonction de l'écart du rapport de mélange, ΔRM, par rapport au rapport de mélange au point de fonctionnement de référence. Le point de jonction entre les segments est le point ΔRM=0.

Ainsi, lorsque le rapport de mélange cible est égal au rapport de mélange au point de fonctionnement de référence, ΔRM vaut 0 et les degrés d'ouverture des vannes chambre valent 100% chacun, donc la différence ΔV avec une ouverture maximale des vannes chambre vaut également 0.

Lorsque ΔRM est strictement positif, cela signifie que le rapport de mélange cible est supérieur au rapport de mélange de référence. Le degré d'ouverture de la première vanne chambre 22 présente donc une différence non nulle ΔVCM avec une ouverture maximale de la première vanne chambre 22 ; en d'autres termes, la première vanne chambre 22 est partiellement fermée, conformément à la courbe 130. Parallèlement, le degré d'ouverture de la deuxième vanne chambre 23 présente une différence nulle ΔVCO=0 avec une ouverture maximale de la deuxième vanne chambre 23, comme illustré sur la figure 5.

Cette situation est inversée lorsque la variation de rapport de mélange est strictement négative.

Cette loi de commande en segments de plage peut être mise en œuvre par une boucle de régulation schématisée sur la figure 6.

Dans ce mode de réalisation, un comparateur 152 reçoit un rapport de mélange cible RMc. Si la régulation se fait en boucle fermée, le comparateur 152 peut également recevoir, comme détaillé au sujet du premier mode de réalisation, une valeur estimée ou mesurée du rapport de mélange RMmes. Le comparateur 152 retourne une valeur ε=RMc-RMmes qui traduit l'écart du rapport de mélange effectif par rapport à sa valeur de consigne.

L'écart ε est fourni ensuite à un régulateur 154 qui effectue la correspondance entre l'écart ε et la variation de rapport de mélange ΔRM nécessaire pour atteindre la valeur cible RMc. Ladite correspondance peut être stockée dans le régulateur 154 sous la forme d'une table prédéterminée ou équivalent.

La valeur ΔRM ainsi déterminée est utilisée, conformément à la loi de commande illustrée sur la figure 5, pour déterminer l'écart de degré d'ouverture ΔV des vannes chambre 22, 23 correspondant. Dans ce mode de réalisation, cela peut être fait de la façon suivante : la valeur ΔRM est fournie en entrée à deux modules de conversion 156, 157 ; de manière plus générale, il peut y avoir autant de modules de conversion que d'ergols. Chaque module de conversion comprend une loi de conversion entre la valeur ΔRM et l'écart de débit ΔQ (ΔQ1, ΔQ2) de l'ergol correspondant. Ici, du fait de la commande des vannes chambre 22, 23 sur des segments distincts, cette loi de conversion est de la forme : ΔQ=ΔRM x T, où T est un paramètre. Comme illustré sur la figure 6, pour le premier module de conversion 156, le paramètre T est égal à 0 si ΔRM est négatif ou nul et à une valeur fixe T1 si ΔRM est strictement positif. Pour le deuxième module de conversion 157, le paramètre T est égal à 0 si ΔRM est positif ou nul et à une valeur fixe T2 si ΔRM est strictement négatif. Dans certains modes de réalisation, selon les caractéristiques des vannes et des pompes, T1 peut être égal à T2.

Chaque écart de débit ΔQ1, ΔQ2 est ensuite converti en écart de degré d'ouverture de vanne chambre correspondant, respectivement ΔVCM et ΔVCO, en utilisant par exemple la fonction inverse de la caractéristique (ou fonction de transfert) de chaque vanne, qui donne le débit en fonction du degré d'ouverture, à débit d'entrée constant. Les valeurs ΔVCM, ΔVCO sont ensuite utilisées par le dispositif de commande 150 pour commander les vannes 22, 23, comme exposé précédemment. Le rapport de mélange résultant de cette commande peut être mesuré ou estimé à nouveau dans le cas d'une régulation en boucle fermée. Sur la figure 6, la rétroaction n'est que partiellement illustrée avec la présence du comparateur 152 et d'une valeur RMmes.

Le fait de passer par la variation de débit ΔQ, dans le dispositif de commande 150 selon le deuxième mode de réalisation, permet d'éviter d'éventuels effets non-linéaires qui seraient dus aux caractéristiques des vannes chambre. Ces effets sont compensés par la prise en compte explicite de la fonction de transfert de chaque vanne chambre.

La régulation du rapport de mélange à partir des première et deuxième vannes chambre 22, 23, comme exposé ci-dessus, peut impacter d'autres paramètres du moteur-fusée 10, par exemple le débit total injectée dans la chambre de combustion, la pression dans la chambre de combustion, etc. Ces autres paramètres peuvent être régulés par d'autres organes, par exemple les vannes de dérivation 24A, 25A, qui permettent de moduler la puissance de la turbine 16 donc les vitesses de rotation des pompes 26, 27.

Bien que la présente description se réfère à des exemples de réalisation spécifiques, des modifications peuvent être apportées à ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Procédé de commande d'un moteur-fusée (10), le moteur-fusée comprenant une chambre de combustion (12), une première vanne d'alimentation de la chambre de combustion (22) pour réguler le débit d'un premier ergol dans une première conduite d'alimentation (20) configurée pour alimenter la chambre de combustion (12), et une deuxième vanne d'alimentation de la chambre de combustion (23) pour réguler le débit d'un deuxième ergol dans une deuxième conduite d'alimentation (21) configurée pour alimenter la chambre de combustion (12), le procédé comprenant la commande conjointe des première et deuxième vannes d'alimentation de la chambre de combustion (22, 23) selon une loi en segments de plage.

2. Procédé de commande selon la revendication 1, dans lequel la loi en segments de plage détermine le degré d'ouverture des première et deuxième vannes d'alimentation de la chambre de combustion (22, 23) en fonction du rapport de mélange des premier et deuxième ergols.

3. Procédé de commande selon la revendication 1 ou 2, comprenant une régulation de la commande des première et deuxième vannes d'alimentation de la chambre de combustion en boucle fermée (60).

4. Procédé de commande selon l'une quelconque des revendications 1 à 3, dans lequel la loi en segments de plage est paramétrée de sorte que les première et deuxième vannes d'alimentation de la chambre de combustion (22, 23) présentent une ouverture maximale au point de jonction entre les segments de plage.

5. Procédé de commande selon l'une quelconque des revendications 1 à 4, dans lequel le moteur-fusée (10) comprend, sur chaque conduite d'alimentation (20, 21), une pompe (26, 27) configurée pour entraîner l'ergol circulant dans ladite conduite (20, 21), les pompes (26, 27) étant entraînées par un arbre commun (18).

6. Procédé de commande selon l'une quelconque des revendications 1 à 5, dans lequel le moteur-fusée (10) comprend un générateur de gaz (14), le générateur de gaz (14) étant alimenté en premier ergol et en deuxième ergol par des conduites de dérivation correspondantes (24, 25) respectivement branchées en dérivation sur les conduites d'alimentation (20, 21) en amont des vannes d'alimentation de la chambre de combustion (22, 23).

7. Programme comportant des instructions pour l'exécution des étapes du procédé de commande selon l'une quelconque des revendications 1 à 6 lorsque ledit programme est exécuté par un ordinateur ou par un microprocesseur.

8. Support d'enregistrement lisible par un ordinateur sur lequel est enregistré un programme d'ordinateur comprenant des instructions pour l'exécution des étapes du procédé de commande selon l'une quelconque des revendications 1 à 6.

9. Dispositif de commande (50) de moteur-fusée, le moteur-fusée (10) comprenant une chambre de combustion (12), une première vanne d'alimentation de la chambre de combustion (22) pour réguler le débit d'un premier ergol dans une première conduite d'alimentation (20) configurée pour alimenter la chambre de combustion (12), et une deuxième vanne d'alimentation de la chambre de combustion (23) pour réguler le débit d'un deuxième ergol dans une deuxième conduite d'alimentation (21) configurée pour alimenter la chambre de combustion (12), le dispositif de commande (50) **caractérisé en ce que** il est configuré pour commander conjointement les première et deuxième vannes d'alimentation de la chambre de combustion (22, 23) selon une loi en segments de plage.

10. Moteur-fusée (10) comprenant une chambre de combustion (12), une première vanne d'alimentation de la chambre de combustion (22) pour réguler le débit d'un premier ergol dans une première conduite d'alimentation (20) configurée pour alimenter la chambre de combustion (12), et une deuxième vanne d'alimentation de la chambre de combustion (23) pour réguler le débit d'un deuxième ergol dans une deuxième conduite d'alimentation (21) configurée pour alimenter la chambre de combustion (12), et un dispositif de commande (50) selon la revendication 9.

## Patentansprüche

1. Verfahren zur Steuerung eines Raketentriebwerks (10), wobei das Raketentriebwerk eine Brennkammer (12), ein erstes Versorgungsventil der Brennkammer (22) zum Regeln des Durchsatzes eines ersten Treibstoffs in einer ersten Versorgungsleitung (20), die dazu ausgestaltet ist, die Brennkammer (12) zu versorgen, und ein zweites Versorgungsventil der Brennkammer (23) zum Regeln des Durchsatzes eines zweiten Treibstoffs in einer zweiten Versorgungsleitung (21) umfasst, die dazu ausgestaltet ist, die Brennkammer (12) zu versorgen, wobei das Verfahren die gemeinsame Steuerung des ersten und zweiten Versorgungsventils der Brennkammer (22, 23) gemäß einem Split-Range-Gesetz umfasst.

2. Steuerverfahren nach Anspruch 1, wobei das Split-Range-Gesetz den Öffnungsgrad des ersten und zweiten Versorgungsventils der Brennkammer (22, 23) in Abhängigkeit von dem Mischungsverhältnis des ersten und zweiten Treibstoffs bestimmt.

3. Steuerverfahren nach Anspruch 1 oder 2, umfassend eine Regelung der Steuerung des ersten und zweiten Versorgungsventils der Brennkammer im geschlossenen Kreis (60).

4. Steuerverfahren nach einem der Ansprüche 1 bis 3, wobei das Split-Range-Gesetz so parametrisiert ist, dass das erste und zweite Versorgungsventil der Brennkammer (22, 23) eine maximale Öffnung an dem Verbindungspunkt der Split-Range-Bereiche aufweisen.

5. Steuerverfahren nach einem der Ansprüche 1 bis 4, wobei das Raketentriebwerk (10) an jeder Versorgungsleitung (20, 21) eine Pumpe (26, 27) umfasst, die dazu ausgestaltet ist, den Treibstoff, der in der Leitung (20, 21) zirkuliert, zu bewegen, wobei die Pumpen (26, 27) durch eine gemeinsame Welle (18) angetrieben werden.

6. Steuerverfahren nach einem der Ansprüche 1 bis 5, wobei das Raketentriebwerk (10) einen Gasgenerator (14) umfasst, wobei der Gasgenerator (14) mit dem ersten Treibstoff und dem zweiten Treibstoff durch entsprechende Umgehungsleitungen (24, 25), die jeweils von den Versorgungsleitungen (20, 21) stromaufwärts der Versorgungsventile der Brennkammer (22, 23) diese umgehend abgezweigt sind, versorgt wird.

7. Programm, das Anweisungen zur Ausführung der Schritte des Steuerverfahrens nach einem der Ansprüche 1 bis 6 beinhaltet, wenn das Programm von einem Computer oder von einem Mikroprozessor ausgeführt wird.

8. Computerlesbarer Datenträger, auf welchem ein Computerprogramm umfassend Anweisungen zur Ausführung der Schritte des Steuerverfahrens nach einem der Ansprüche 1 bis 6 gespeichert ist.

9. Steuervorrichtung (50) für ein Raketentriebwerk, wobei das Raketentriebwerk (10) eine Brennkammer (12), ein erstes Versorgungsventil der Brennkammer (22) zum Regeln des Durchsatzes eines ersten Treibstoffs in einer ersten Versorgungsleitung (20), die dazu ausgestaltet ist, die Brennkammer (12) zu versorgen, und ein zweites Versorgungsventil der Brennkammer (23) zum Regeln des Durchsatzes eines zweiten Treibstoffs in einer zweiten Versorgungsleitung (21) umfasst, die dazu ausgestaltet ist, die Brennkammer (12) zu versorgen, wobei die Steuervorrichtung (50) **dadurch gekennzeichnet ist, dass** sie dazu ausgestaltet ist, das erste und zweite Versorgungsventil der Brennkammer (22, 23) gemeinsam gemäß einem Split-Range-Gesetz zu steuern.

10. Raketentriebwerk (10), das eine Brennkammer (12), ein erstes Versorgungsventil der Brennkammer (22) zum Regeln des Durchsatzes eines ersten Treibstoffs in einer ersten Versorgungsleitung (20), die dazu ausgestaltet ist, die Brennkammer (12) zu versorgen, und ein zweites Versorgungsventil der Brennkammer (23) zum Regeln des Durchsatzes eines zweiten Treibstoffs in einer zweiten Versorgungsleitung (21), die dazu ausgestaltet ist, die Brennkammer (12) zu versorgen, sowie eine Steuervorrichtung (50) nach Anspruch 9 umfasst.

## Claims

1. A method for controlling a rocket engine (10), the rocket engine comprising a combustion chamber (12), a first combustion chamber feed valve (22) for regulating the flow rate of a first propellant in a first feed line (20) configured to feed the combustion chamber (12), and a second combustion chamber feed valve (23) for regulating the flow rate of a second propellant in a second feed line (21) configured to feed the combustion chamber (12), the method comprising the joint control of the first and second combustion chamber feed valves (22, 23) according to a split range law.

2. The control method according to claim 1, wherein the split range law determines the degree of opening of the first and second combustion chamber feed valves (22, 23) depending on the mixing ratio of the first and second propellants.

3. The control method according to claim 1 or 2, comprising a regulation of the control of the first and second combustion chamber feed valves in a closed loop (60).

4. The control method according to any one of claims 1 to 3, wherein the split range law is configured so that the first and second combustion chamber feed valves (22, 23) have a maximum opening at the junction point between the split ranges.

5. The control method according to any one of claims 1 to 4, wherein the rocket engine (10) comprises, on each feed line (20, 21), a pump (26, 27) configured to drive the propellant circulating in said line (20, 21), the pumps (26, 27) being driven by a common shaft (18).

6. The control method according to any one of claims 1 to 5, wherein the rocket engine (10) comprises a gas generator (14), the gas generator (14) being fed with the first propellant and with the second propellant by corresponding bypass lines (24, 25) respectively connected for bypass to the feed line (20, 21) upstream of the combustion chamber feed valves (22, 23).

7. A program including instructions for the execution of steps of the control method according to any one of claims 1 to 6 when said program is executed by a computer or by a microprocessor.

8. A recording medium readable by a computer on which is recorded a computer program comprising instructions for the execution of the steps of the control method according to any one of claims 1 to 6.

9. A rocket engine control device (50), the rocket engine (10) comprising a combustion chamber (12), a first combustion chamber feed valve (22) for regulating the flow rate of a first propellant in a first feed line (20) configured to feed the combustion chamber (12), and a second combustion chamber feed valve (23) for regulating the flow rate of a second propellant in a second feed line (21) configured to feed the combustion chamber (12), the control device (50) **characterized in that** it is configured to jointly control the first and second combustion chamber feed valves (22, 23) according to a split range law.

10. A rocket engine (10) comprising a combustion chamber (12), a first combustion chamber feed valve (22) for regulating the flow rate of a first propellant in a first feed line (20) configured to feed the combustion chamber (12), and a second combustion chamber feed valve (23) for regulating the flow rate of a second propellant in a second feed line (21) configured to feed the combustion chamber (12), and a control device (50) according to claim 9.
